# EUROPÄISCHE PATENTSCHRIFT

(11) **EP 1 645 608 B1**
(45) Veröffentlichungstag und Bekanntmachung des Hinweises auf die Patenterteilung: **18.11.2009**
(21) Anmeldenummer: 05020971.7
(22) Anmeldetag: 27.09.2005
(51) Int. Cl.: C09J 123/10, C09J 123/08

(54) **Verwendung von Polyolefinwachsen in Heissschmelzmassen**
Use of polyolefin waxes in hot melts
Utilisation de cires de polyoléfine dans des masses thermofusibles

(30) Priorität: 06.10.2004 DE 102004048536
(43) Veröffentlichungstag der Anmeldung: 12.04.2006
(73) Patentinhaber: Clariant Produkte (Deutschland) GmbH, 65929 Frankfurt am Main (DE)
(72) Erfinder: Bach, Sebastijan, DI., 86462 Langweid (DE); Herrmann, Hans-Friedrich, Dr., 64521 Gross-Gerau (DE); Hohner, Gerd, Dr., 86368 Gersthofen (DE)

(56) Entgegenhaltungen:
- WO-A-2004/104128
- US-A- 5 081 322
- US-A- 5 998 547
- US-A1- 2003 096 896
- US-A1- 2003 108 807
- US-A1- 2005 043 455

## Beschreibung

Die Erfindung betrifft Heißschmelzmassen enthaltend Polyolefinwachse, die mit Metallocenkatalysatoren hergestellt worden sind.

Heißschmelzmassen oder hot melts sind thermoplastische, bei Umgebungstemperatur feste Werkstoffe, die im schmelzflüssigen Zustand schichtförmig auf geeignete Substratoberflächen appliziert werden und dort nach dem Erstarren unterschiedliche Funktionen ausüben. Sie sind vorzugsweise auf Basis von Harzen, Wachsen, thermoplastischen Kunststoffen und Elastomeren aufgebaut und enthalten gegebenenfalls Zusätze von Füllstoffen, Pigmenten und Additiven wie Stabilisatoren etc.

Beispielsweise können Heißschmelzmassen als lösemittelfreie Klebstoffe zum Verkleben eingesetzt werden. Derartige Schmelzkleber werden aufgrund ihrer vielseitigen Vorteile in zunehmendem Umfang u.a. in der Verpackungs-, Möbel-, Textil- und Schuhindustrie als wirtschaftliche und umweltfreundliche Alternative zu herkömmlichen, lösemittelbasierenden Klebstoffen eingesetzt. Bestandteile üblicher Schmelzkleber-Rezepturen sind polare oder unpolare Polymere - in der Regel Ethylen-Vinylacetat-Copolymere - Harze sowie Wachse.

Die polaren oder unpolaren Polymeren dienen als Gerüstsubstanz. Sie sorgen für den kohäsiven Zusammenhalt der Klebemasse und tragen gleichzeitig zur Adhäsion zum Substrat bei. Der Harzzusatz verbessert die Adhäsionswirkung und kann auf die verschiedenen Kleberkomponenten gegebenenfalls einen verträglichkeitsvermittelnden Effekt ausüben. Wachse werden zur Modifizierung in Anteilen, bezogen auf die Schmelzklebermassen von in der Regel weniger als 10 Gew.-% eingesetzt. Sie regulieren wichtige physikalische Eigenschaften der Klebemassen wie etwa Härte, Schmelzviskosität und Erweichungspunkt und beeinflussen in ihrer Wirkung auf offene Zeit, Adhäsion, Kohäsion etc. entscheidend das anwendungstechnische Verhalten. Bei Wachseinsatzmengen von mehr als 10 Gew.-% wurde bisher in der Regel eine Verschlechterung der Eigenschaften, insbesondere eine Verminderung der Klebkraft des Heißschmelzklebers gefunden.

Heißschmelzmassen werden weiterhin im Straßenbau als thermoplastische Bindemittel zur Herstellung verkehrsleitender Sichtzeichen verwendet, wie z.B. "Zebrastreifen" an Fußgängerübergängen, Mittel- oder Begrenzungslinien oder anderen signalisierenden Hinweisen zur Steuerung des Verkehrsflusses. Die dafür eingesetzten Bindemittel können neben Wachsen thermoplastische Kunststoffe, Harze sowie Weichmacher enthalten. Zur Anwendung für die Straßenmarkierung werden diese Bindemittel in der Regel mit Füllstoffen wie Sand oder Kalk, Pigmenten wie Titandioxid und lichtreflektierenden Zusätzen, z.B. Glasperlen abgemischt.

Als Wachse werden in Heißschmelzmassen bisher makro- und mikrokristalline Paraffinwachse, Fischer-Tropsch-Wachse sowie Polyolefinwachse eingesetzt. Unter Polyolefinwachsen werden hier niedermolekulare Polyolefine im Molmassenbereich zwischen etwa 500 und 20000 g/mol (zahlenmittlere Molmasse Mₙ) und MFR-Werten, gemessen nach ASTM D 1238-01, von größer als 3000 g/10 min verstanden.

Polyolefinwachse können durch thermischen Abbau verzweigter hochpolymerer Polyolefin-Kunststoffe oder durch direkte Polymerisation von Olefinen hergestellt werden. Als Polymerisationsverfahren kommen beispielsweise Hochdrucktechnologien in Frage, wobei die Olefine, in der Regel Ethylen, bei hohen Drucken und Temperaturen radikalisch zu verzweigten Wachsen umgesetzt werden, daneben Niederdruck- bzw. Zieglerverfahren, bei denen Ethylen und/oder höhere 1-Olefine mit Hilfe metallorganischer Katalysatoren bei vergleichsweise geringeren Drucken und Temperaturen polymerisiert werden.

Als Variante des Niederdruckverfahrens ist in neuerer Zeit eine Arbeitsweise bekannt geworden, bei der als metallorganische Katalysatoren Metallocenverbindungen Verwendung finden. Letztere enthalten Titan-, Zirkonium- oder Hafniumatome als aktive Spezies und werden in der Regel in Kombination mit Cokatalysatoren, z.B. Organoaluminium- oder Borverbindungen, bevorzugt Aluminoxanverbindungen, eingesetzt. Die Polymerisation erfolgt bei Bedarf in Gegenwart von Wasserstoff als Molmassenregler. Metallocenverfahren zeichnen sich dadurch aus, dass im Vergleich zur älteren Zieglertechnologie Wachse mit engerer Molmassenverteilung, gleichmäßigerem Comonomereinbau, niedrigeren Schmelzpunkten und höherer Katalysatoreffektivität erhalten werden können.

Überraschend wurde nun gefunden, dass sich Heißschmelzmassen enthaltend Polyolefinwachse, die mit Hilfe von Metallocenkatalysatoren hergestellt wurden, einen Tropf- oder Erweichungspunkt Ring/Kugel zwischen 80 und 165°C, eine Schmelzviskosität, gemessen bei einer Temperatur von 170°C, zwischen 20 und 40000 mPa.s und eine Glasübergangstemperatur von maximal -10°C aufweisen, **dadurch gekennzeichnet, dass** die Polyolefinwachse mit einem Gewichtsanteil von größer oder gleich 50 Gew.-% in den Heißschmelzmassen enthalten sind, in besonders vorteilhafter Weise als Schmelzkleber eignen. Derartige Schmelzkleber weisen überragende Eigenschaften in Bezug auf die Klebekraft (Adhäsion zum Substrat) und die Kälteflexibilität auf.

Weiterhin wurde gefunden, dass sich die genannten Heißschmelzmassen in hervorragender Weise als Bestandteil von Straßenmarkierungsmassen eignen. Insbesondere weisen derartige Markierungsmassen eine verbesserte Haftung zur Straße auf.

Gegenstand der Erfindung sind daher Heißschmelzmassen enthaltend ein oder mehrere Polyolefinwachse, die mit Hilfe von Metallocenkatalysatoren hergestellt wurden, einen Tropf- oder Erweichungspunkt Ring/Kugel zwischen 80 und 165°C, eine Schmelzviskosität, gemessen bei einer Temperatur von 170°C, zwischen 20 und 40000 mPa.s und eine Glasübergangstemperatur von maximal -10°C aufweisen, **dadurch gekennzeichnet, dass** die Polyolefinwachse mit einem Gewichtsanteil von größer oder gleich 50 Gew.-% in den Heißschmelzmassen enthalten sind.

Bevorzugt weisen die in den erfindungsgemäßen Heißschmelzmassen enthaltenen Polyolefinwachse einen Tropf- oder Erweichungspunkt Ring/Kugel zwischen 90 und 160°C, eine Schmelzviskosität, gemessen bei einer Temperatur von 170°C, zwischen 50 und 30000 mPa.s und eine Glasübergangstemperatur von maximal -20°C auf.

Die in den erfindungsgemäßen Heißschmelzmassen enthaltenen Polyolefinwachse weisen vorzugsweise eine zahlenmittlere Molmasse Mₙ zwischen 500 und 20000 g/mol, besonders bevorzugt zwischen 800 und 10000 g/mol und insbesondere bevorzugt zwischen 1000 und 5000 g/mol und vorzugsweise eine gewichtsmittlere Molmasse M_{w} zwischen 1000 und 40000 g/mol, besonders bevorzugt zwischen 1600 und 30000 g/mol und insbesondere bevorzugt zwischen 2000 und 20000 g/mol auf.

Als in den erfindungsgemäßen Heißschmelzmassen enthaltene Polyolefinwachse kommen beispielsweise Homopolymerisate des Propylens oder höherer 1-Olefine oder Copolymerisate des Propylens mit Ethylen oder mit höheren 1-Olefinen oder deren Copolymerisate untereinander in Frage. Als höhere 1-Olefine werden vorzugsweise lineare oder verzweigte Olefine mit 4 bis 20 C-Atomen und vorzugsweise mit 4 bis 6 C-Atomen, eingesetzt. Diese Olefine können eine mit der olefinischen Doppelbindung in Konjugation stehende aromatische Substitution aufweisen. Beispiele hierfür sind 1-Buten, 1-Hexen, 1-Octen oder 1-Octadecen sowie Styrol. Die Copolymeren bestehen vorzugsweise zu 70 bis 99,9 und besonders bevorzugt zu 80 bis 99 Gew.-% aus einer Olefinart. Weiterhin bevorzugt sind Copolymerisate des Propylens mit 0,1 bis 30, bevorzugt 1 bis 20 Gew.-% Ethylen.

In einer bevorzugten Ausführungsform der Erfindung sind die in den Heißschmelzmassen enthaltenen Polyolefinwachse Propylenhomopolymerwachse.

In einer weiteren bevorzugten Ausführungsform der Erfindung sind die in den Heißschmelzmassen enthaltenen Polyolefinwachse Copolymerwachse aus Propylen und einem oder mehreren weiteren Monomeren ausgewählt aus Ethylen und verzweigten oder unverzweigten 1-Alkenen mit 4 bis 20 C-Atomen wobei der Gehalt an Struktureinheiten hervorgegangen aus Propylen in den Copolymerwachsen von 70 bis 99,9 Gew.-% beträgt. Zur Herstellung dieser Copolymerwachse können auch verschiedene der genannten 1-Alkene verwendet werden.

In einer weiteren bevorzugten Ausführungsform der Erfindung sind die in den Heißschmelzmassen enthaltenen Polyolefinwachse Copolymerwachse aus Ethylen und mindestens einem verzweigten oder unverzweigten 1-Alken mit 3 bis 20 C-Atomen wobei der Gehalt an Struktureinheiten hervorgegangen aus dem einen oder den mehreren 1-Alkenen in den Copolymerwachsen von 0,1 bis 30 Gew.-% beträgt.

In einer weiteren bevorzugten Ausführungsform der Erfindung sind die in den Heißschmelzmassen enthaltenen Polyolefinwachse Copolymerwachse aus Propylen und einem oder mehreren weiteren Monomeren ausgewählt aus Ethylen und verzweigten oder unverzweigten 1-Alkenen mit 4 bis 20 C-Atomen wobei der Gehalt an Struktureinheiten hervorgegangen aus Ethylen in den Copolymerwachsen von 0,1 bis 30 Gew.-% und der Gehalt an Struktureinheiten hervorgegangen aus dem einen oder den mehreren 1-Alkenen in den Copolymerwachsen von 0,1 bis 50 Gew.-% beträgt.

Die in den Heißschmelzmassen eingesetzten Olefin-Homo- und Copolymerwachse können polar modifiziert sein.

Die erfindungsgemäßen Heißschmelzmassen können zusätzlich Polyolefin-Kunststoffe, Harze, Wachse, Weichmacher, polare oder unpolare Polymere, Pigmente, Füllstoffe, Stabilisatoren und/oder Antioxidantien enthalten.

Für die Herstellung der erfindungsgemäß verwendeten Polyolefinwachse werden Metallocenverbindungen der Formel I eingesetzt.

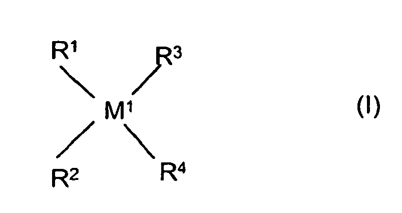

Diese Formel umfasst auch Verbindungen der Formel la, 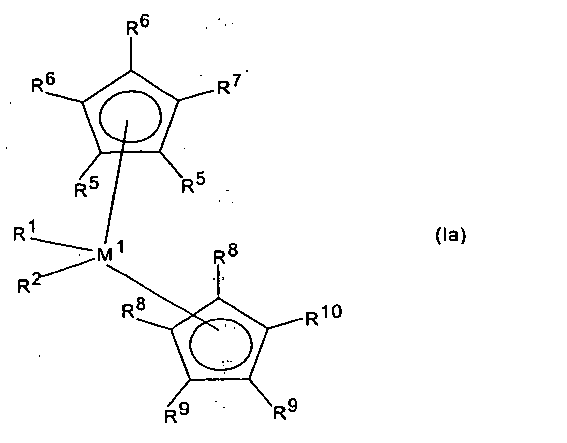 der Formel Ib 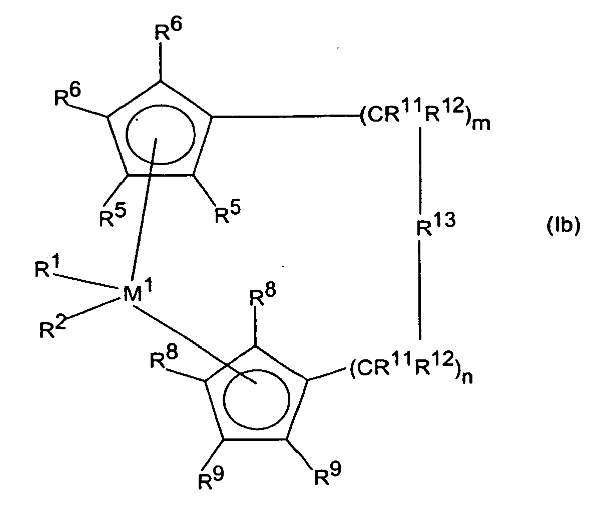 und der Formel Ic

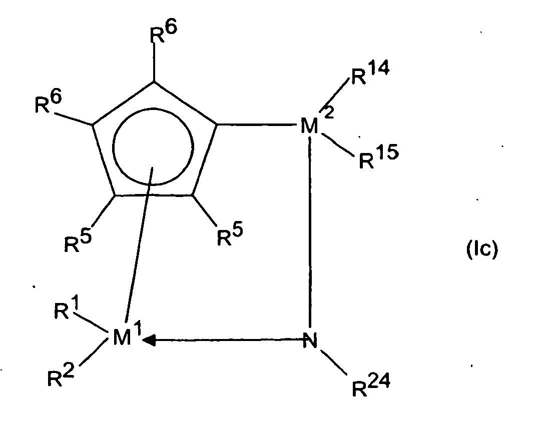

In den Formeln I, la und Ib ist M¹ ein Metall der Gruppe IVb, Vb oder Vlb des Periodensystems, beispielsweise Titan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 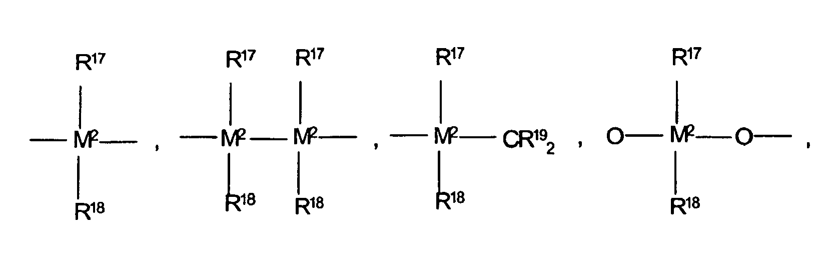 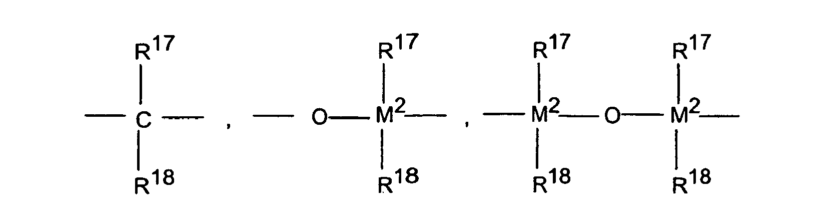 =BR¹⁷, =AlR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniu mdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Zur Herstellung der erfindungsgemäßen Heißschmelzmassen können Polyolefin-Metallocenwachse in unveränderter oder in polar modifizierter Form eingesetzt werden. Polar modifizierte Wachse werden in bekannter Weise aus unpolaren Rohstoffen durch Oxidation mit sauerstoffhaltigen Gasen, beispielsweise Luft, oder durch radikalische Pfropfreaktion mit polaren Monomeren, beispielsweise α,β-ungesättigten Carbonsäuren oder deren Derivaten wie Acrylsäure, Maleinsäure oder Maleinsäureanhydrid oder ungesättigten Organosilanverbindungen wie Trialkoxyvinylsilanen hergestellt. Die polare Modifizierung von Metallocen-Polyolefinwachsen durch Oxidation mit Luft ist beispielsweise in EP 0 890 583, die Modifizierung durch Pfropfung beispielsweise in US-A-5,998,547 oder JP 54-145785 beschrieben.

Weiterer Gegenstand der Erfindung ist die Verwendung der erfindungsgemäßen Heißschmelzmassen als Schmelzkleber.

Die Polyolefinwachse sind vorzugsweise mit einem Gewichtsanteil zwischen 50 und 99 Gew.-% und besonders bevorzugt zwischen 60 und 90 Gew.-% in den als Schmelzkleber verwendeten Heißschmelzmassen enthalten. Weitere mögliche Bestandteile sind Harze, Wachse und unpolare oder polare Polymere wie z.B. Ethylen-Vinylacetat-Copolymere, ataktische Poly-α-Olefine (APAO), Polyisobutylen, Styrol-Butadien-Styrol-Blockpolymere oder Styrol-Isopren-Styrol-Blockpolymere, für besonders hoch beanspruchte Verklebungen auch Polyamide oder Polyester. Als Harzkomponenten können z.B. Kolophoniumharze und deren Derivate oder Kohlenwasserstoffharze enthalten sein, als Wachse Kohlenwasserstoffwachse wie Fischer-Tropsch-Paraffine, nicht mit Metallocenkatalysatoren hergestellte Polyolefinwachse, wobei diese unpolar oder polar modifiziert, z.B. oxidiert oder mit polaren Monomeren wie Maleinsäureanhydrid gepfropft, sein können. Die Schmelzklebermassen können zusätzlich Füllstoffe oder Hilfsstoffe wie Weichmacher, Pigmente und Stabilisatoren wie Antioxidantien oder Lichtschutzmittel enthalten.

Weiterer Gegenstand der Erfindung ist die Verwendung der erfindungsgemäßen Heißschmelzmassen als Bindemittel für die Herstellung von Straßenmarkierungen.

Die Polyolefinwachse sind in den für die Straßenmarkierung als Bindemittel eingesetzten Heißschmelzmassen vorzugsweise mit einem Gewichtsanteil zwischen 5 und 99 Gew.-% enthalten.

In einer besonders bevorzugten Ausführungsform der Erfindung sind die Polyolefinwachse in den für die Straßenmarkierung als Bindemittel eingesetzten Heißschmelzmassen mit einem Gewichtsanteil zwischen 20 und 90 Gew.-% enthalten.

In einer weiteren besonders bevorzugten Ausführungsform der Erfindung sind die Polyolefinwachse in den für die Straßenmarkierung als Bindemittel eingesetzten Heißschmelzmassen mit einem Gewichtsanteil zwischen 50 und 99 Gew.-% enthalten.

Ganz besonders bevorzugt sind die Polyolefinwachse in den für die Straßenmarkierung als Bindemittel eingesetzten Heißschmelzmassen mit einem Gewichtsanteil zwischen 60 und 90 Gew.-% enthalten.

Weitere mögliche Bestandteile sind unpolare oder polare Polymere, Harze und Wachse der oben beschriebenen Art sowie Weichmacher wie z.B. Paraffinöl und Antioxidantien. Zum Einsatz für die Straßenmarkierung wird das Bindemittel in der Regel mit weiteren Komponenten wie Füllstoffen, z.B. Sand oder Kalk sowie Pigmenten wie z.B. Titandioxid und lichtreflektierenden Zusätzen wie z.B. Glasperlen abgemischt.

Die nachfolgenden Beispiele sollen die Erfindung näher erläutern, ohne sie jedoch darauf zu beschränken.

### Beispiele

Die Schmelzviskositäten wurden nach DIN 53019 mit einem Rotationsviskosimeter, die Tropfpunkte nach DIN 51801/2, die Erweichungspunkte Ring/Kugel nach DIN EN 1427 und die Glasübergangstemperaturen mit Hilfe der Differentialthermoanalyse nach DIN 51700 bestimmt. Das Molmassengewichtsmittel M_{w}, das Molmassenzahlenmittel Mₙ und der resultierende Quotient M_{w}/Mₙ wurden durch Gelpermeationschromatographie bei 135°C in 1,2-Dichlorbenzol ermittelt.

Die erfindungsgemäß eingesetzten, in Tabelle 1 aufgeführten Metallocen-Polyolefinwachse wurden nach dem in EP-A-0 571 882 angegebenen Verfahren hergestellt.

**Tabelle 1: Eingesetzte Polyolefinwachse**

| | Produkttyp | Erweichungspunkt/ Tropfpunkt [°C] | Viskosität bei 170°C [mPa.s] |
|---|---|---|---|
| Wachs 1 (erfindungsgemäß) | Propylen-Ethylen-Copolymerwachs (Metallocen) | 88 | 6300 |
| Wachs 2 (erfindungsgemäß) | Propylen-Homopolymerwachs (Metallocen) | 143 | 60 |
| Licowax^{®} PP 220 | Propylen-Homopolymerwachs (Ziegler) | 158 | 700 |

### Anwendungstechnische Prüfergebnisse

### A. Verwendung in Schmelzkleber-Rezepturen

Unter Verwendung der in Tabelle 1 aufgeführten Wachse wurden Schmelzklebermassen gemäß den in Tabelle 2 aufgeführten Mischungsverhältnissen hergestellt. Die Komponenten wurden gemeinsam aufgeschmolzen und 1 h bei 180°C gerührt.

Zur Prüfung der Kohäsion wurden aus den Mischungen gemäß DIN 53455 Formkörper vergossen und deren mechanische Stabilität im Zugversuch geprüft.

Zur Bestimmung der Kälteflexibilität wurden 250 mm x 10 mm große Prüfkörper hergestellt und über einen Dorn gebogen. Die Temperatur wurde in Schritten von 1 ° beginnend bei 0°C erniedrigt. Als Messgröße diente diejenige Temperatur, bei der der Prüfkörper bricht.

**Tabelle 2: Eigenschaften der Rezepturmischungen und anwendungstechnische Ergebnisse**

| Beispiel Nr. | Wachs 1 [Gew.-Teile] | Wachs 2 [Gew.-Teile] | Elvax^{®} 220 [Gew.-Teile] | Licowax^{®} PP 220 [Gew.-Teile] | Regalite^{®} 1140 [Gew.-Teile] | Schmelzpunkt [°C] | Schmelzviskosität [mPas] | Glasübergangstemperatur [°C] | Kälteflexibilität [°C] | Kohäsion [N/mm²] |
|---|---|---|---|---|---|---|---|---|---|---|
| 1 | 36 | 45 | | | 19 | 148 | 936 | -16 | -17 | 3,2 |
| 2 | 56 | 30 | | | 14 | 140 | 2100 | -22 | -23 | 3,9 |
| 3 | 71 | 21 | | | 8 | 136 | 3370 | -24 | -26 | 3,8 |
| | | | | | | | | | | |
| 4 (Vgl.) | 10 | 30 | | | 60 | 144 | 960 | 16 | 18 | 1,4 |
| 5 (Vgl.) | 14 | 21 | | | 65 | 138 | 2186 | 18 | 19 | 1,2 |
| 6 (Vgl.) | 7 | 14 | | | 79 | 134 | 3130 | 35 | 35 | 0,8 |
| 7 (Vgl.) | | | 48 | 5 | 47 | 158 | 23500 | -14 | -16 | 1,2 |
| 8 (Vgl.) | | | 10 | 5 | 85 | 156 | 14720 | 12 | 11 | 0,6 |
| 9 (Vgl.) | | | 66 | 5 | 29 | 140 | 32920 | -22 | -23 | 1,2 |

| | | | | | | | | | | |
|---|---|---|---|---|---|---|---|---|---|---|
| Elvax^{®} 220: Ethylen-Vinylacetat-Copolymer, Hersteller Dupont AG Licowax^{®} PP 220: Polypropylenwachs aus Ziegler-Synthese, Hersteller Clariant AG Regalite^{®} 1140: Kohlenwasserstoffharz, Hersteller Eastman | | | | | | | | | | |

Die Beispiele 1 bis 3 sind erfindungsgemäß. Bei den Beispielen 4 bis 9 handelt es sich dagegen um Vergleichsbeispiele.

Die Beispiele 1 bis 3 zeigen im Vergleich mit den Beispielen 4 bis 6, dass durch eine Erhöhung des Wachsanteils auf größer 50 Gew.-% eine deutliche Verbesserung der Kohäsion sowie eine Erniedrigung der Glasübergangstemperatur und eine Erhöhung der Kälteflexibilität erreicht werden kann. Konventionell mit Ethylen-Vinylacetat-Copolymer und herkömmlichem Wachs rezeptierte Schmelzklebermassen zeigen neben höheren Schmelzviskositäten vergleichsweise schlechtere Kohäsion und zum Teil schlechtere Kälteflexibilität (Beispiele 7 bis 9).

### B. Verwendung als Bindemittelkomponente für die Straßenmarkierung

### Beispiel 10 (Vergleichsbeispiel)

40 Gew.-Teile Vestoplast^{®} 708 (APAO, Degussa AG), 40 Gew.-Teile Regalite^{®} 1125 (Kohlenwasserstoffharz, Eastman), 4 Gew.-Teile Paraffinöl, 12 Gew.-Teile Licowax^{®} PP 230 (Ziegler-PP-Wachs der Clariant AG) sowie 4 Gew.-Teile Licomont^{®} AR 504 (mit Maleinsäureanhydrid gepfropftes PP-Wachs zur Adhäsionsverbesserung, Clariant AG) wurden bei 180°C homogen vermischt. 50 g der erhaltenen Schmelze wurden auf einer 10 cm x 10 cm großen Musterplatte aus Asphaltstraßenbelag verteilt. Nach dem Erkalten wurde die beschichtete Platte 24 h bei -15°C aufbewahrt.

### Beispiel 11 (erfindungsgemäß)

Eine bei 180°C homogenisierte Schmelzmischung aus 39 Gew.-Teilen des in Tabelle 1 genannten Wachses 1 und 9 Gew.-Teilen des in Tabelle 1 genannten Wachses 2, 40 Gew.-Teilen Regalite^{®} 1125 sowie 12 Gew.-Teilen Licowax^{®} PP 230 wurde in der in Beispiel 10 beschriebenen Weise zur Herstellung einer Prüfschicht verwendet. Die beschichtete Platte wurde wiederum 24 h bei -15°C gelagert.

Nach Beendigung der Kältelagerung wurden die Platten aus dem Kühlschrank entnommen. Beim Versuch, die Prüfschicht manuell vom Untergrund abzulösen, zeigte sich, dass die Mischung aus Beispiel 11 ein deutlich besseres Haftvermögen aufwies als die Vergleichsmischung aus Beispiel 10.

## Patentansprüche

1. Heißschmelzmassen enthaltend ein oder mehrere Polyolefinwachse, die mit Hilfe von Metallocenkatalysatoren hergestellt wurden, einen Tropf- oder Erweichungspunkt Ring/Kugel zwischen 80 und 165 °C, eine Schmelzviskosität, gemessen bei einer Temperatur von 170 °C, zwischen 20 und 40 000 mPa·s und eine Glasübergangstemperatur von maximal -10 °C aufweisen, **dadurch gekennzeichnet, dass** die Polyolefinwachse mit einem Gewichtsanteil von größer oder gleich 50 Gew.-% in den Heißschmelzmassen enthalten sind.

2. Heißschmelzmassen nach Anspruch 1, **dadurch gekennzeichnet, dass** das eine oder die mehreren Polyolefinwachse einen Tropf- oder Erweichungspunkt Ring/Kugel zwischen 90 und 160 °C, eine Schmelzviskosität, gemessen bei einer Temperatur von 170 °C, zwischen 50 und 30 000 mPa·s und eine Glasübergangstemperatur von maximal -20 °C aufweisen.

3. Heißschmelzmassen nach Anspruch 1 oder 2, **dadurch gekennzeichnet, dass** das eine oder die mehreren Polyolefinwachse eine zahlenmittlere Molmasse Mₙ zwischen 500 und 20 000 g/mol und eine gewichtsmittlere Molmasse M_{w} zwischen 1000 und 40 000 g/mol aufweisen.

4. Heißschmelzmassen nach einem oder mehreren der Ansprüche 1 bis 3,
**dadurch gekennzeichnet, dass** das eine oder die mehreren Polyolefinwachse Propylenhomopolymerwachse sind.

5. Heißschmelzmassen nach einem oder mehreren der Ansprüche 1 bis 3,
**dadurch gekennzeichnet, dass** das eine oder die mehreren Polyolefinwachse Copolymerwachse aus Propylen und einem oder mehreren weiteren Monomeren ausgewählt aus Ethylen und verzweigten oder unverzweigten 1-Alkenen mit 4 bis 20 C-Atomen sind und der Gehalt an Struktureinheiten hervorgegangen aus Propylen in den Copolymerwachsen von 70 bis 99,9 Gew.-% beträgt.

6. Heißschmelzmassen nach einem oder mehreren der Ansprüche 1 bis 3,
**dadurch gekennzeichnet, dass** das eine oder die mehreren Polyolefinwachse Copolymerwachse aus Ethylen und mindestens einem verzweigten oder unverzweigten 1-Alken mit 3 bis 20 C-Atomen sind und der Gehalt an Struktureinheiten hervorgegangen aus dem einen oder den mehreren 1-Alkenen in den Copolymerwachsen von 0,1 bis 30 Gew.-% beträgt.

7. Heißschmelzmassen nach einem oder mehreren der Ansprüche 1 bis 6,
**dadurch gekennzeichnet, dass** die eingesetzten Olefin-Homo- und Copolymerwachse polar modifiziert sind.

8. Heißschmelzmassen nach einem oder mehreren der Ansprüche 1 bis 7,
**dadurch gekennzeichnet, dass** sie weiterhin eine oder mehrere Substanzen ausgewählt aus Polyolefin-Kunststoffen, Harzen, Wachsen, Weichmachern, polaren oder unpolaren Polymeren, Pigmenten, Füllstoffen, Stabilisatoren und Antioxidantien enthalten.

9. Verwendung von Heißschmelzmassen nach einem oder mehreren der Ansprüche 1 bis 8 als Schmelzkleber.

10. Verwendung nach Anspruch 9, **dadurch gekennzeichnet, dass** die Polyolefinwachse In den Heißschmelzmassen in Anteilen zwischen 50 und 99 Gew.-% enthalten sind.

11. Verwendung nach Anspruch 10, **dadurch gekennzeichnet, dass** die Polyolefinwachse in den Heißschmelzmassen in Anteilen zwischen 60 und 90 Gew.-% enthalten sind.

12. Verwendung von Heißschmelzmassen nach einem oder mehreren der Ansprüche 1 bis 8 als Bindemittel für die Herstellung von Straßenmarklerungen.

13. Verwendung nach Anspruch 12, **dadurch gekennzeichnet, dass** die Polyolefinwachse In den Heißschmelzmassen in Anteilen zwischen 50 und 99 Gew.-% enthalten sind.

14. Verwendung nach Anspruch 12, **dadurch gekennzeichnet, dass** die Polyolefinwachse in den Heißschmelzmassen in Anteilen zwischen 60 und 90 Gew.-% enthalten sind.

## Claims

1. A hot melt composition comprising one or more polyolefin waxes which have been prepared using metallocene catalysts, have a dropping point or ring & ball softening point of between 80 and 165°C, have a melt viscosity, measured at a temperature of 170°C, of between 20 and 40 000 mPa.s, and have a glass transition temperature of not more than -10°C, wherein in the hot melt composition the polyolefin waxes are present with a weight fraction of greater than or equal to 50% by weight.

2. The hot melt composition as claimed in claim 1, wherein the one or more polyolefin waxes have a dropping point or ring & ball softening point of between 90 and 160°C, a melt viscosity, measured at a temperature of 170°C, of between 50 and 30 000 mPa.s, and a glass transition temperature of not more than -20°C.

3. The hot melt composition as claimed in claim 1 or 2, wherein the one or more polyolefin waxes have a number-average molar mass Mₙ of between 500 and 20 000 g/mol, and a weight-average molar mass M_{w} of between 1000 and 40 000 g/mol.

4. The hot melt composition as claimed in one or more of claims 1 to 3, wherein the one or more polyolefin waxes are propylene homopolymer waxes.

5. The hot melt composition as claimed in one or more of claims 1 to 3, wherein the one or more polyolefin waxes are copolymer waxes of propylene and one or more further monomers selected from ethylene and branched or unbranched 1-alkenes having 4 to 20 carbon atoms and the amount of structural units originating from propylene in the copolymer waxes is from 70 to 99.9% by weight.

6. The hot melt composition as claimed in one or more of claims 1 to 3, wherein the one or more polyolefin waxes are copolymer waxes of ethylene and at least one branched or unbranched 1-alkene having 3 to 20 carbon atoms and the amount of structural units originating from the one or more 1-alkenes in the copolymer waxes is from 0.1% to 30% by weight.

7. The hot melt composition as claimed in one or more of claims 1 to 6, wherein the olefin homopolymer and copolymer waxes used have undergone polar modification.

8. The hot melt composition as claimed in one or more of claims 1 to 7, further comprising one or more substances selected from polyolefin polymers, resins, waxes, plasticizers, polar or apolar polymers, pigments, fillers, stabilizers, and antioxidants.

9. The use of a hot melt composition as claimed in one or more of claims 1 to 8 as a hot melt adhesive.

10. The use as claimed in claim 9, wherein the polyolefin waxes are present in the hot melt composition in fractions of between 50% and 99% by weight.

11. The use as claimed in claim 10, wherein the polyolefin waxes are present in the hot melt composition in fractions of between 60% and 90% by weight.

12. The use of a hot melt composition as claimed in one or more of claims 1 to 8 as a binder for producing roadmarkings.

13. The use as claimed in claim 12, wherein the polyolefin waxes are present in the hot melt composition in fractions of between 50% and 99% by weight.

14. The use as claimed in claim 12, wherein the polyolefin waxes are present in the hot melt composition in fractions of between 60% and 90% by weight.

## Revendications

1. Matières thermofusibles contenant une ou plusieurs cires de polyoléfines qui ont été préparées à l'aide de catalyseurs métallocène, présentent un point de goutte ou de ramollissement sphère/anneau compris entre 80 et 165 °C, une viscosité à chaud, mesurée à une température de 170 °C, comprise entre 20 et 40 000 mPa.s et une température de transition vitreuse d'au maximum -10 °C, **caractérisées en ce que** les cires de polyoléfines sont contenues en une proportion pondérale égale ou supérieure à 50 % en poids dans les matières thermofusibles.

2. Matières thermofusibles selon la revendication 1, **caractérisées en ce que** ladite une ou lesdites plusieurs cires de polyoléfines présente(nt) un point de goutte ou de ramollissement sphère/anneau compris entre 90 et 160 °C, une viscosité à chaud, mesurée à une température de 170 °C, comprise entre 50 et 30 000 mPa.s et une température de transition vitreuse d'au maximum -20 °C,

3. Matières thermofusibles selon la revendication 1 ou 2, **caractérisées en ce que** ladite une ou lesdites plusieurs cires de polyoléfines présente(nt) une masse moléculaire moyenne en nombre Mₙ comprise entre 500 et 20 000 g/mole et une masse moléculaire moyenne en poids M_{w} comprise entre 1 000 et 40 000 g/mole.

4. Matières thermofusibles selon une ou plusieurs des revendications 1 à 3, **caractérisées en ce que** ladite une ou lesdites plusieurs cires de polyoléfines sont des cires d'homopolymères de propylène.

5. Matières thermofusibles selon une ou plusieurs des revendications 1 à 3, **caractérisées en ce que** ladite une ou lesdites plusieurs cires de polyoléfines sont des cires de copolymères de propylène et d'un ou plusieurs autres monomères choisis parmi l'éthylène et des 1-alcènes ramifiés ou non ramifiés ayant de 4 à 20 atomes de carbone et la teneur des cires de copolymères en motifs structuraux provenant du propylène va de 70 à 99,9 % en poids.

6. Matières thermofusibles selon une ou plusieurs des revendications 1 à 3, **caractérisées en ce que** ladite une ou lesdites plusieurs cires de polyoléfines sont des cires de copolymères d'éthylène et d'au moins un 1-alcène ramifié ou non ramifié ayant de 3 à 20 atomes de carbone et la teneur des cires de copolymères en motifs structuraux provenant dudit un ou desdits plusieurs 1-alcènes va de 0,1 à 30 % en poids.

7. Matières thermofusibles selon une ou plusieurs des revendications 1 à 6, **caractérisées en ce que** les cires d'homopolymères et de copolymères d'oléfines utilisées sont à modification polaire.

8. Matières thermofusibles selon une ou plusieurs des revendications 1 à 7, **caractérisées en ce que** qu'elles contiennent en outre une ou plusieurs substances choisies parmi des matières plastiques à base de polyoléfines, des résines, des cires, des plastifiants, des polymères polaires ou non polaires, des pigments, des charges, des stabilisants et des antioxydants.

9. Utilisation de matières thermofusibles selon une ou plusieurs des revendications 1 à 8, en tant que colle thermofusible.

10. Utilisation selon la revendication 9,
**caractérisée en ce que** les cires de polyoléfines sont contenues dans les matières thermofusibles en proportions comprises entre 50 et 99 % en poids.

11. Utilisation selon la revendication 10,
**caractérisée en ce que** les cires de polyoléfines sont contenues dans les matières thermofusibles en proportions comprises entre 60 et 90 % en poids.

12. Utilisation de matières thermofusibles selon une ou plusieurs des revendications 1 à 8, en tant que liant pour la production de marquages de voies de circulation.

13. Utilisation selon la revendication 12,
**caractérisée en ce que** les cires de polyoléfines sont contenues dans les matières thermofusibles en proportions comprises entre 50 et 99 % en poids.

14. Utilisation selon la revendication 12,
**caractérisée en ce que** les cires de polyoléfines sont contenues dans les matières thermofusibles en proportions comprises entre 60 et 90 % en poids.
